# EUROPEAN PATENT APPLICATION

(11) **EP 4 678 944 A1**
(43) Date of publication of application: **14.01.2026**
(21) Application number: 25187495.4
(22) Date of filing: 04.07.2025
(51) Int. Cl.: F16H 57/03, F16H 57/04

(54) **VEHICULAR DRIVING DEVICE**

(30) Priority: 11.07.2024 JP 2024111886
(71) Applicant: AISIN CORPORATION, Aichi 448-8650 (JP)
(72) Inventor: HAYAKAWA, Kyohei, Kariya, 448-8650 (JP); KATSUDA, Takuya, Kariya, 448-8650 (JP); DEGUCHI, Tsubasa, Kariya, 448-8650 (JP)
(74) Representative: TBK

(57) **Abstract**

In a vehicular driving device (10), an oil storage section (26) in which oil is stored is formed in a lower part of a case (20), the case (20) includes a heat transfer inhibiting section (40) that is provided at a position in an up-down direction (Z) based on an oil level in the oil storage section (26) in such a way as to extend in a horizontal direction, and the heat transfer inhibiting section (40) has higher thermal resistance than a portion of the case (20) being located on an upper side (Z1) with respect to and adjacent to the heat transfer inhibiting section (40) or a portion of the case (20) being located on a lower side (Z2) with respect to and adjacent to the heat transfer inhibiting section (40).

## Description

### TECHNICAL FIELD

This disclosure generally relates to a vehicular driving device including a rotating electric machine, a power transmission mechanism, and a case for storing oil.

### BACKGROUND DISCUSSION

There is known a vehicular driving device including a rotating electric machine, a power transmission mechanism, and a case for storing oil. JP2020-091001A discloses a vehicular driving device including a rotating electric machine (13), a power transmission device (2), and a case for storing oil (3) that has an oil storage section (9) in which oil is stored being formed in a lower part thereof. In this vehicular driving device, oil in the oil storage section (9) is sucked by an oil pump (15) and supplied to the rotating electric machine (13).

In the vehicular driving device according to JP2020-091001A, the oil sucked by the oil pump from the oil storage section is cooled by an oil cooler and then is supplied to the rotating electric machine. For such a vehicular driving device, it may be desired to utilize oil in a vehicle, the oil having a temperature increased by heat generated by the rotating electric machine. However, when a temperature of the oil stored in the oil storage section may be easily decreased, it is difficult to utilize the heat.

A need thus exists for a vehicular driving device that allows heat of oil stored in an oil storage section to be easily utilized.

### SUMMARY

A vehicular driving device according to this disclosure includes a rotating electric machine, an output member that is coupled to and drives a wheel, a power transmission mechanism for transmitting power between the rotating electric machine and the output member, and a case for accommodating the rotating electric machine, the power transmission mechanism, and oil, wherein an oil storage section in which oil is stored is formed in a lower part of the case, the case includes a heat transfer inhibiting section that is provided at a position in an up-down direction based on an oil level in the oil storage section in such a way as to extend in a horizontal direction, and the heat transfer inhibiting section has higher thermal resistance than a portion of the case being located on an upper side with respect to and adjacent to the heat transfer inhibiting section or a portion of the case being located on a lower side with respect to and adjacent to the heat transfer inhibiting section.

This configuration can prevent heat of oil in the oil storage section from transferring via the case and to a portion of the case above the heat transfer inhibiting section. Thus, an amount of heat of the oil to be dissipated outside via the case can be reduced. Therefore, the heat of the oil stored in the oil storage section can be easily utilized.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating a vehicle on which a vehicular driving device according to a first embodiment is installed;
Fig. 2 is a schematic exploded perspective view of the vehicular driving device illustrated in Fig. 1;
Fig. 3 is a diagram illustrating a heat transfer inhibiting section viewed from inside of a case illustrated in Fig. 2;
Fig. 4 is a diagram illustrating a cross section of the case in which the heat transfer inhibiting section illustrated in Fig. 2 is formed;
Fig. 5 is a diagram illustrating a heat transfer inhibiting section of a vehicular driving device according to a second embodiment;
Fig. 6 is a diagram illustrating a heat transfer inhibiting section of a vehicular driving device according to an alternative embodiment; and
Fig. 7 is a diagram illustrating a heat transfer inhibiting section of a vehicular driving device according to an alternative embodiment.

### DETAILED DESCRIPTION

### (First Embodiment)

A vehicular driving device 10 according to a first embodiment is described below with reference to the drawings.

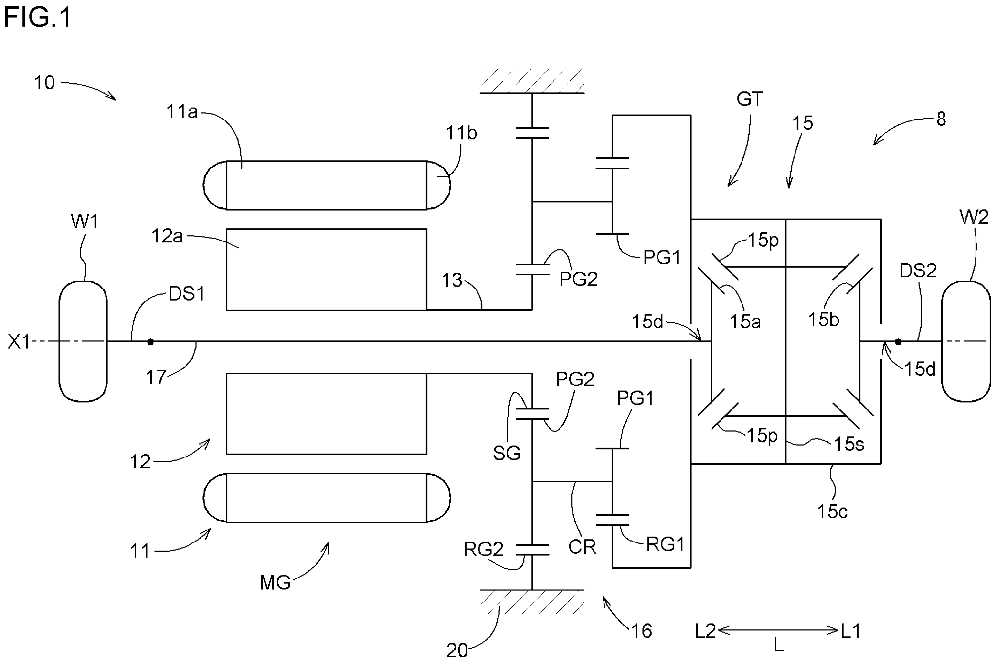

Fig. 1 is a diagram illustrating an example of a vehicle 8 on which the vehicular driving device 10 is installed. The vehicular driving device 10 includes a rotating electric machine MG. The rotating electric machine MG is a drive power source for the vehicle 8. Examples of the vehicle 8 include Hybrid Electric Vehicles (HEVs) equipped with an internal-combustion engine and a rotating electric machine, Plug-in Hybrid Electric Vehicles, Battery Electric Vehicles (BEVs), and Fuel Cell Electric Vehicles (FCEVs). The vehicle 8 may be a three-wheel vehicle or a four-wheel vehicle. In the present embodiment, the vehicle 8 is a four-wheel automobile.

The vehicular driving device 10 includes an output member. The output member is coupled to and drives wheels (W1, W2). The phrase "coupled to and drives" or "coupled to and driven by" herein means a state in which two rotatable elements are coupled in such a way that the two rotatable elements can transmit a driving force therebetween, and this includes a state in which these two rotatable elements are coupled in such a way as to rotate in an integrated manner and a state in which these two rotatable elements are coupled in such a way that the two rotatable elements can transmit the driving force therebetween through one or more transmission members. Such transmission members include various types of members that transmit the driving force at the same rotational speed or by changing the rotational speed, such as a shaft, a gear mechanism, a belt, and a chain. An engaging device that selectively transmits the rotation and the driving force, such as a frictionally engaging device or a meshing engaging device may be included in the transmission member. It should be noted, however, that when the phrase "coupled to and drives" or "coupled to and driven by" is used for rotatable elements in a planetary gear mechanism, it means a state in which the rotatable elements in the planetary gear mechanism are coupled to and driven by each other without a rotatable element other than those included in the planetary gear mechanism in between the rotatable elements. In the present description, the phrase "rotate in an integrated manner" means to rotate in an integrated manner regardless of whether elements can be separated or not. In other words, a plurality of members that rotate in an integrated manner may be integrally formed from a single member or may be constructed from separate members and integrated by means of welding, a spline joint, or the like.

The wheels include a first wheel W1 and a second wheel W2. In the present embodiment, the wheels to which the output member is coupled and that the output member drives, that is, drive wheels are a pair of wheels (the first wheel W1 and the second wheel W2) that are provided in the vehicle 8, but the wheels may be two pairs of wheels or a single wheel. Examples of the "output member" include, as will be described later, a first side gear 15a, a second side gear 15b, a spline engagement section 15d between the first side gear 15a and the second side gear 15b, a first drive shaft DS1, a second drive shaft DS2, and a connecting shaft 17. In the present embodiment, the spline engagement section 15d serves as the output member.

The first wheel W1 is coupled to and driven by the first drive shaft DS1 and the second wheel W2 is coupled to and driven by the second drive shaft DS2. In the present embodiment, a pair of the side gears (15a, 15b) each of which serves as an output gear of a differential gear mechanism 15 include the first side gear 15a and the second side gear 15b. The first side gear 15a is coupled to and driven by the first drive shaft DS1 through the connecting shaft 17 and the second side gear 15b is coupled to and driven by the second drive shaft DS2. For example, the first side gear 15a and the connecting shaft 17 are coupled by means of a spline joint and the second side gear 15b and the second drive shaft DS2 are also coupled by means of a spline joint. These connected portions are the spline engagement sections 15d.

The rotating electric machine MG serves as a drive power source for the wheels (the first wheel W1 and the second wheel W2). The rotating electric machine MG is an inner rotor type rotating electric machine. The rotating electric machine MG includes a stator 11 and a rotor 12 that is coupled to a rotor shaft 13 in such a way as to rotate in conjunction with the rotor shaft 13 in an integrated manner. In the following description, a direction along a rotation axis X1 of the rotor 12 is referred to as an "axial direction L". One side of the axial direction L is referred to as a "first side L1 of the axial direction". Another side of the axial direction L is referred to as a "second side L2 of the axial direction".

The stator 11 includes a cylindrical stator core 11a and a coil wound around the stator core 11a. The coil includes a coil end section 11b protruding outward from the stator core 11a in the axial direction L. An axis of the stator core 11a coincides with the rotation axis X1 of the rotor 12 described above. In the present embodiment, the axis of the stator core 11a coincides with a rotation axis X1 of a differential case 15c to be described later. In the present embodiment, the stator 11 is fixed to a case 20 to be described later.

The rotor 12 is provided on a radially inner side and rotatably with respect to the stator 11. The rotor 12 includes a rotor core 12a and a permanent magnet (not illustrated) fixed to the rotor core 12a. The rotor shaft 13 is coaxial with the rotor core 12a and formed in a cylindrical shape, and on an outer circumference of the rotor shaft 13 on the first side L1 of the axial direction, a sun gear SG of a planetary gear mechanism that constitutes a reducer 16 is disposed in such a way as to rotate in conjunction with the rotor shaft 13 in an integrated manner. In the illustrated example, the rotating electric machine MG is a revolving-field type rotating electric machine.

A direction orthogonal to the rotation axis X1 of the rotor 12 is referred to as a "radial direction". In the radial direction, a side of the rotation axis X1 of the rotor 12 is referred to as a "radially inner side" and the opposite side is referred to as a "radially outer side". In a condition in which the vehicular driving device 10 is installed on the vehicle 8, a direction along a vertical direction is referred to as an "up-down direction Z" and an upper side of the up-down direction Z is referred to as an "upper side Z1" while a lower side of the up-down direction Z is referred to as a "lower side Z2". When the vehicular driving device 10 is horizontally installed in the vehicle 8, one of the radial directions coincides with the up-down direction Z. A direction orthogonal to the axial direction L and the up-down direction Z is referred to as a "front-back direction H" and one side of the front-back direction H is referred to as a "first side H1 of the front-back direction" while another side of the front-back direction H is referred to as a "second side H2 of the front-back direction". In the present embodiment, the first side H1 of the front-back direction is a front side of the vehicle 8 and the second side H2 of the front-back direction is a rear side of the vehicle 8. The axial direction L corresponds to a "width direction" of the vehicle 8.

The vehicular driving device 10 includes a power transmission mechanism GT for transmitting a driving force between the rotating electric machine MG and the output member. The power transmission mechanism GT includes the reducer 16 and the differential gear mechanism 15. In the present embodiment, the rotating electric machine MG, the reducer 16, and the differential gear mechanism 15 are disposed coaxially with each other in this order from the second side L2 of the axial direction to the first side L1 of the axial direction. In the present embodiment, the shaft on which the rotating electric machine MG, the reducer 16, and the differential gear mechanism 15, all of which have the rotation axis X1 as the axis, are disposed serves as a rotation shaft of the vehicular driving device 10 and also as the rotation shaft of the rotating electric machine MG, the reducer 16, and the differential gear mechanism 15.

Although, in the vehicular driving device 10 according to the present embodiment, the rotating shafts of the rotating electric machine MG, the reducer 16, and the differential gear mechanism 15 are configured to be coaxial, the vehicular driving device 10 may be configured to include two shafts in which the rotation shafts of the rotating electric machine MG and the differential gear mechanism 15 are different from each other. Further, the vehicular driving device 10 may be configured to include three shafts in which the reducer 16 includes a third rotation shaft that is different from either of the rotation shafts of the rotating electric machine MG and the differential gear mechanism 15.

The reducer 16 is configured as a planetary gear mechanism that includes an input element that rotates in conjunction with the rotor shaft 13 in an integrated manner, a stationary element fixed to the case 20 to be described below, an output element that rotates in conjunction with a differential input element (differential case 15c) in an integrated manner, and a planetary gear. This planetary gear mechanism is a planetary gear mechanism that includes a complex set of one sun gear SG, two ring gears (a first ring gear RG1 and a second ring gear RG2), two planetary gears (a first planetary gear PG1 and a second planetary gear PG2) that rotate in an integrated manner, and a carrier CR that supports and allow the two planetary gears to rotate. In the present embodiment, the first planetary gear PG1 is formed in such a way as to have a diameter smaller than that of the second planetary gear PG2.

The sun gear SG rotates in conjunction with the rotor 12 and the rotor shaft 13 in an integrated manner. The second ring gear RG2 is fixed to the case 20 to be described later. The first ring gear RG1 is disposed on the first side L1 of the axial direction with respect to the second ring gear RG2 and coupled to the differential case 15c in such a way as to rotate in conjunction with the differential case 15c in an integrated manner. The second planetary gear PG2 meshes with the sun gear SG and the second ring gear RG2 while the first planetary gear PG1 rotates in conjunction with the second planetary gear PG2 in an integrated manner and meshes with the first ring gear RG1.

The differential gear mechanism 15 is a differential gear mechanism that employs a bevel gear and includes pinions 15p and side gears, both of which are bevel gears. The side gears include the first side gear 15a and the second side gear 15b. The pinions 15p are rotatably supported by a pinion shaft 15s that is supported by the differential case 15c and disposed in such a way as to extend along the radial direction. The differential case 15c accommodates the pinions 15p, the first side gear 15a, the second side gear 15b, and the pinion shaft 15s inside.

The first side gear 15a is coupled to and drives the first wheel W1 through the connecting shaft 17. The second side gear 15b is coupled to the second drive shaft DS2, which is coupled to and drives the second wheel W2 serving as the wheel on the first side L1 of the axial direction, in such a way as to rotate in an integrated manner. Each of the first side gear 15a and the second side gear 15b includes a gear section that meshes with the pinion 15p and a spline engagement section 15d that is coupled to the connecting shaft 17 or the second drive shaft DS2.

The first side gear 15a is coupled to the connecting shaft 17 that extends along the axial direction L on the radially inner side with respect to and through the reducer 16 and the hollow cylindrical rotor shaft 13. The connecting shaft 17 is coupled to the first drive shaft DS1, which is coupled to and drives the first wheel W1 serving as the wheel on the second side L2 of the axial direction, in such a way as to rotate in an integrated manner.

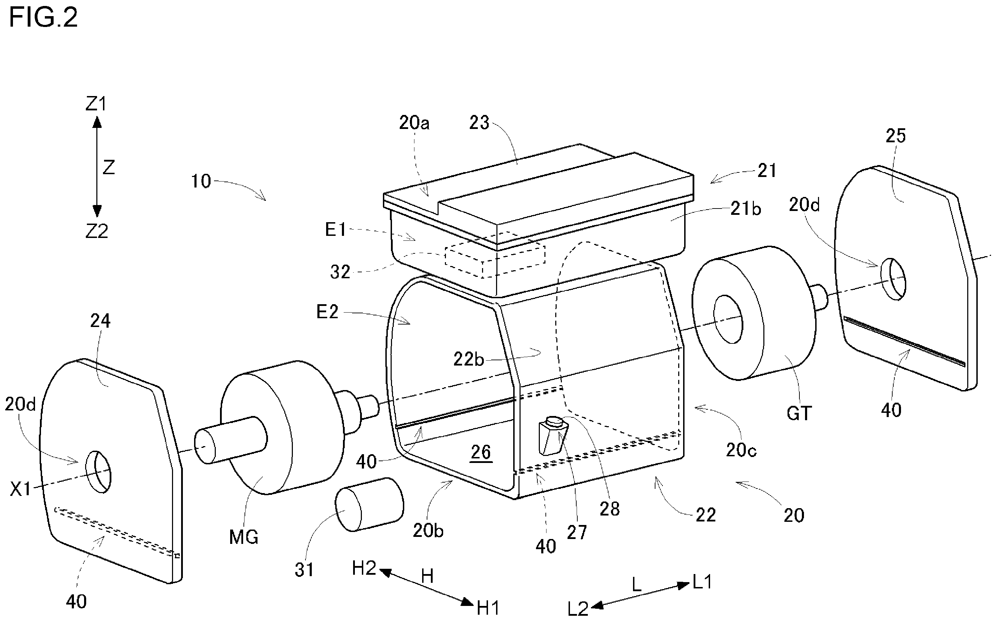

Fig. 2 is a diagram illustrating an example of an exploded perspective view of the vehicular driving device 10. The vehicular driving device 10 includes the case 20 for storing oil. The case 20 accommodates the rotating electric machine MG and the power transmission mechanism GT. Examples of a material of the case 20 include metal such as aluminum, titanium, or iron, a metal alloy employing such a metal, and oil-resistant resin.

The case 20 includes a first accommodation chamber E1 and a second accommodation chamber E2. The first accommodation chamber E1 accommodates, for example, an inverter module for driving and controlling the rotating electric machine MG and a power module. The second accommodation chamber E2 accommodates, for example, the rotating electric machine MG and the power transmission mechanism GT. In the present embodiment, the case 20 includes the first accommodation chamber E1, the second accommodation chamber E2, and a partition wall (not illustrated) for separating the first accommodation chamber E1 and the second accommodation chamber E2, all of which are integrally constructed.

The case 20 includes a first case member 21 and a second case member 22. The first case member 21 provides a section where the first accommodation chamber E1 is formed. In the present embodiment, the first accommodation chamber E1 and the second accommodation chamber E2 are arranged in such a way as to be adjacent to each other in the up-down direction Z.

The first case member 21 is formed with a rectangular parallelepiped shape in such a way that an upper side Z1 in the up-down direction Z of the first case member 21 is open when installed on the vehicle. The first case member 21 includes a peripheral wall 21b that is disposed in such a way as to surround a first opening 20a and extend along the up-down direction Z when installed on the vehicle. The case 20 includes a first cover 23. The first opening 20a is closed by the first cover 23.

The second case member 22 is formed with a cylindrical shape in which both sides in the axial direction L of the second case member 22 are open and includes a cylindrical peripheral wall 22b. The cylindrical peripheral wall 22b surrounds the power transmission mechanism GT from the radially outer side. An opening formed on the second side L2 of the axial direction is a second opening 20b and an opening formed on the first side L1 of the axial direction is a third opening 20c.

The case 20 includes a second cover 24 and a third cover 25. The second opening 20b is closed by the second cover 24 and the third opening 20c is closed by the third cover 25. In the second cover 24 and the third cover 25, there are formed a pair of through-holes 20d for the aforementioned drive shafts (the first drive shaft DS1 and the second drive shaft DS2) to pass through.

In a lower part of the case 20, there is formed an oil storage section 26 in which oil is stored. In the present embodiment, the oil storage section 26 is formed in the second case member 22. On an external surface of the case 20, there is provided an opening 27 for refilling the case 20 with oil. The opening 27 is disposed on the lower side Z2 with respect to the center of the case 20 in the up-down direction Z. In the present embodiment, the opening 27 is formed in the second case member 22. The opening 27 is closed by a lid 28.

The vehicular driving device 10 includes a heat exchanger 32 that is connected to the oil storage section 26 and performs heat exchange between the oil in the oil storage section 26 and a heating medium. The oil is cooled by the heating medium in the heat exchanger 32. The heat exchanger 32 may be connected to the oil storage section 26 directly or through an oil pump 31 to be described later. Although, in the present embodiment, the heat exchanger 32 is disposed inside the case 20, the heat exchanger 32 may be disposed outside the case 20. In the illustrated example, the heat exchanger 32 is housed in the first accommodation chamber E1.

In the present embodiment, the vehicular driving device 10 is configured in such a way that the heating medium heated in the heat exchanger 32 can be supplied to heating equipment, a battery, or the like. In this manner, heat of the heating medium can be utilized in cold environment for battery warm-up or warming of a cabin. In the present embodiment, examples of the heat exchanger 32 include an oil cooler, an air conditioner, a heating equipment, or the like. The heating medium may be a liquid or a gas. Examples of the "heating medium" include antifreeze, water, oil, and fluorocarbon.

The vehicular driving device 10 includes the oil pump 31 that is connected to the heat exchanger 32 and sucks the oil in the oil storage section 26. The oil pump 31 may be disposed inside or outside the case 20. The oil pump 31 may be connected to the oil storage section 26 in such a way that the oil sucked from the oil storage section 26 is cooled in the heat exchanger 32 before flowing into the oil pump 31, or may be connected to the oil storage section 26 in such a way that the oil sucked from the oil storage section 26 travels through the oil pump 31 before being cooled in the heat exchanger 32.

The case 20 includes a heat transfer inhibiting section 40 that is provided at a position in the up-down direction Z based on an oil level in the oil storage section 26. The heat transfer inhibiting section 40 inhibits heat transfer at least in the up-down direction Z. The term "heat transfer" herein includes heat transfer in the same material, heat transfer through different materials, and heat transfer through different members. In the present embodiment, the heat transfer inhibiting section 40 includes a concave groove that is formed on at least one of an inner surface and the external surface of the case 20.

The heat transfer inhibiting section 40 is provided in the case 20 in such a way as to extend in a horizontal direction. The phrase "extend in a horizontal direction" is satisfied if the direction of extension has a component in the horizontal direction or if the section extends along a direction that is sloped relative to the horizontal direction. Alternatively, for example, a plurality of straight sections extending in the horizontal direction that constitute the heat transfer inhibiting section 40 may be connected by a curve or a slope. In the present embodiment, the heat transfer inhibiting section 40 is provided in the case 20 in such a way as to extend only in the horizontal direction. It should be noted that the horizontal direction and the up-down direction Z for the vehicular driving device 10 respectively mean a horizontal direction and an up-down direction Z when the vehicle 8 on which the vehicular driving device 10 is installed is on a horizontal road surface.

In the present embodiment, the heat transfer inhibiting section 40 is provided in the case 20 in such a way as to extend in the horizontal direction near the oil level. The heat transfer inhibiting section 40 is formed on each surface on both sides in the front-back direction H of the case 20 in such a way as to extend in the axial direction L. The heat transfer inhibiting section 40 is formed on each surface on both sides in the axial direction L of the case 20 in such a way as to extend in the front-back direction H.

The heat transfer inhibiting section 40 has higher thermal resistance than a portion of the case 20 located on the upper side Z1 with respect to and adjacent to the heat transfer inhibiting section 40. The heat transfer inhibiting section 40 has higher thermal resistance than a portion of the case 20 located on the lower side Z2 with respect to and adjacent to the heat transfer inhibiting section 40. It should be noted that there may be a portion that has higher or lower thermal resistance than the heat transfer inhibiting section 40, the portion being located on the upper side Z1 with respect to the portion located on the upper side Z1 with respect to and adjacent to the heat transfer inhibiting section 40, and there may be a portion that has higher or lower thermal resistance than the heat transfer inhibiting section 40, the portion being located on the lower side Z2 with respect to the portion located on the lower side Z2 with respect to and adjacent to the heat transfer inhibiting section 40. The unit of thermal resistance is represented using, for example, "°C/W" or "K/W". When the thermal resistance is high, heat is not easily conducted and when the thermal resistance is low, heat is easily conducted.

The heat transfer inhibiting section 40 is formed continuously or non-continuously in such a way as to extend in the horizontal direction. In the present embodiment, the heat transfer inhibiting section 40 is formed continuously along the entire circumference extending along the horizontal direction of the case 20. The heat transfer inhibiting section 40 may be provided in such a way as to extend continuously in the horizontal direction around the case once or twice or more.

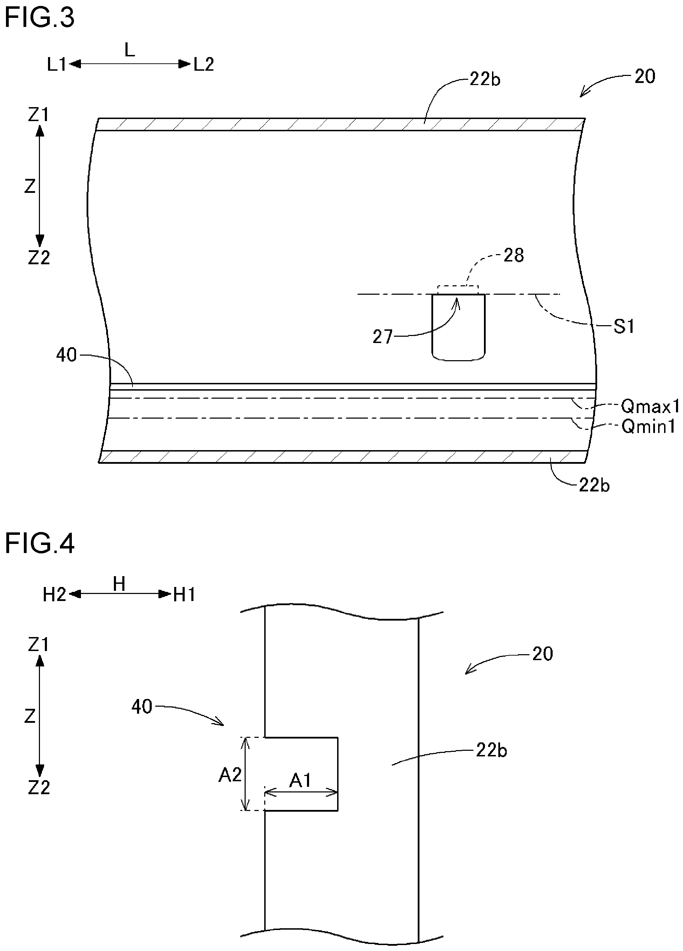

The heat transfer inhibiting section 40 is provided at a position that is on a level with or lower than those of a pair of the through-holes 20d in the case 20 for the drive shafts (the first drive shaft DS1 and the second drive shaft DS2) to pass through. In the present embodiment, the heat transfer inhibiting section 40 is provided at a position that is on a level with or lower than that of the rotation axis X1 of the rotor 12 in the up-down direction Z. Fig. 3 is a schematic diagram illustrating an example of the heat transfer inhibiting section 40 viewed from the inside of the case 20. In the present embodiment, the heat transfer inhibiting section 40 is provided at a position that is on a level with or lower than a height S1 of the opening 27 in the up-down direction Z. When the position of the heat transfer inhibiting section 40 is lowered, a region in the case 20 to which heat of the oil in the oil storage section (26) transfers can be easily reduced.

The heat transfer inhibiting section 40 is provided at a position that is on a level with or higher than the oil level in the oil storage section 26. In the present embodiment, the heat transfer inhibiting section 40 is provided at a position that is higher than the oil level in the oil storage section 26. Examples of the oil level in the oil storage section 26 include the highest oil level Qmax, the lowest oil level Qmin, an average oil level Qave, an oil level Qmax1 in the oil storage section 26 when the rotating electric machine MG is not in operation, and an oil level Qmin1 in the oil storage section 26 when the rotating electric machine MG is in operation. When the heat transfer inhibiting section 40 is provided at a position that is on a level with or higher than the oil level, an amount of the heat of the oil in the oil storage section 26 to be dissipated outside via the case 20 can be easily reduced.

**In** the present embodiment, the heat transfer inhibiting section 40 is provided at a position that is on a level with or higher than the oil level Qmin1 in the oil storage section 26 when the rotating electric machine MG is in operation. In the present embodiment, the heat transfer inhibiting section 40 is provided in the case 20 in such a way as to extend in the horizontal direction near the oil level in the oil storage section 26. In the present embodiment, the heat transfer inhibiting section 40 is provided in the case 20 in such a way as to extend along the oil level.

Fig. 4 is a diagram illustrating an example of a cross section of the case 20 in which the heat transfer inhibiting section 40 is formed. The heat transfer inhibiting section 40 is formed in such a way as to occupy a part of the case 20 in a thickness direction. In the present embodiment, the heat transfer inhibiting section 40 is a concave groove that is formed on the inner surface of the case 20. The heat transfer inhibiting section 40 may be a concave groove that is formed on the external surface of the case 20. By providing the concave groove in the case 20, a cross-sectional area of a heat transfer path in the up-down direction Z can be reduced.

A depth A1 of the concave groove is, for example, equal to or more than 20% of a thickness of the case 20. The depth A1 of the concave groove may be equal to or more than 30% of the thickness of the case 20. By configuring the depth A1 of the concave groove to be deep, an effect of inhibiting heat transfer in the up-down direction Z can be easily enhanced. Although no restriction is imposed on the thickness of the case 20, the thickness is, for example, equal to or more than 1 mm and equal to or less than 20 mm. In the present embodiment, the thickness of the case 20 is approximately 3 mm.

The depth A1 of the concave groove is, for example, equal to or less than 80% of the thickness of the case 20. The depth A1 of the concave groove may be equal to or less than 60% of the thickness of the case 20. By configuring the depth A1 of the concave groove to be shallow, the strength of the case 20 can be easily assured.

A width A2 of the concave groove in the up-down direction Z is, for example, equal to or more than 3 mm. The width A2 of the concave groove in the up-down direction Z may be equal to or more than 5 mm. By configuring the width A2 of the concave groove in the up-down direction Z to be wide, the effect of inhibiting heat transfer in the up-down direction Z can be easily enhanced. The width A2 of the concave groove in the up-down direction Z is, for example, equal to or less than 80 mm. The width A2 of the concave groove in the up-down direction Z may be equal to or less than 50 mm. By configuring the depth A2 of the concave groove in the up-down direction Z to be narrow, the strength of the case 20 can be easily assured

### (Second Embodiment)

A vehicular driving device 10 according to a second embodiment is described below with reference to the drawings. The description below is focused on differences from the first embodiment. Matters not specifically described below are similar to those in the first embodiment.

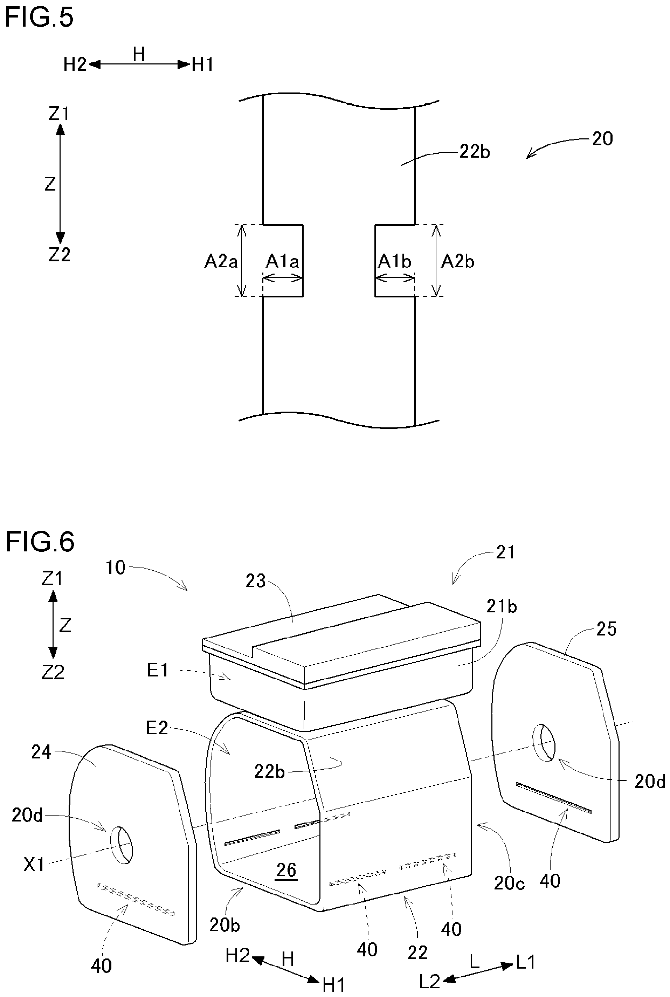

Fig. 5 is a diagram illustrating an example of a cross section of the case 20 in which the heat transfer inhibiting section 40 according to the present embodiment is formed. FIG. 5 is a diagram that is equivalent to FIG. 4. In the present embodiment, the heat transfer inhibiting section 40 includes a pair of concave grooves that are formed on the inner and external surfaces of the case 20. A pair of the concave grooves are formed at the same position on the inner and external surfaces of a wall of the case 20. In this manner, a pair of the concave grooves can reduce the thickness of the wall from both the inside and the outside, and the cross-sectional area of the heat transfer path in the up-down direction Z can be reduced.

The depth of the concave groove that is formed on the inner surface of the case 20 is referred to as a depth A1a. The depth of the concave groove that is formed on the external surface of the case 20 is referred to as a depth A1b. The sum of the depth A1a and the depth A1b is, for example, equal to or more than 10% of the thickness of the case 20. The sum of the depth A1a and the depth A1b may be equal to or more than 20% of the thickness of the case 20. The sum of the depth A1a and the depth A1b is, for example, equal to or less than 80% of the thickness of the case 20. The sum of the depth A1a and the depth A1b may be equal to or less than 60% of the thickness of the case 20.

The width of the concave groove that is formed on the inner surface of the case 20 in the up-down direction Z is referred to as a width A2a. The width of the concave groove that is formed on the external surface of the case 20 in the up-down direction Z is referred to as a width A2b. Each of the width A2a and the width A2b is, for example, equal to or more than 3 mm. Each of the width A2a and the width A2b may be equal to or more than 5 mm. Each of the width A2a and the width A2b is, for example, equal to or less than 80 mm. Each of the width A2a and the width A2b may be equal to or less than 50 mm.

### (Alternative embodiments)

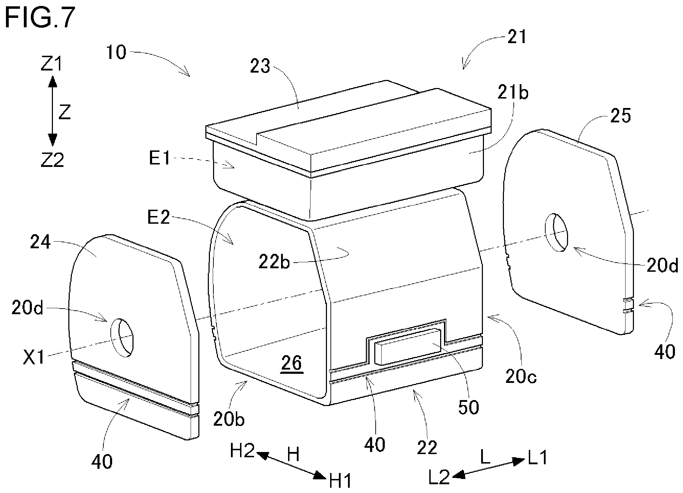

Next, alternative embodiments of the vehicular driving device 10 are described.
(1) In the embodiments described above, configurations in which the heat transfer inhibiting section 40 is formed continuously along the entire circumference extending in the horizontal direction of the case 20 are described as examples. However, configurations for embodiments are not limited to such examples, and for example, the heat transfer inhibiting section 40 may be formed non-continuously along the entire circumference extending in the horizontal direction of the case 20 as illustrated in Fig. 6. Alternatively, the heat transfer inhibiting section 40 may be provided, for example, only at a portion of the entire circumference extending in the horizontal direction of the case 20. Moreover, the heat transfer inhibiting section 40 may be formed only on surfaces on both sides in the axial direction L or only on surfaces on both sides in the front-back direction H of the case 20. In the example illustrated in Fig. 6, the heat transfer inhibiting section 40 may be a concave groove that is formed on the external surface of the case 20.
(2) In the embodiments described above, configurations in which the heat transfer inhibiting section 40 is formed as a single straight line extending in the horizontal direction are described as examples. However, configurations for embodiments are not limited to such examples, and for example, the heat transfer inhibiting section 40 may be formed as a plurality of straight lines extending in the horizontal direction as illustrated in Fig. 7. Alternatively, for example, the heat transfer inhibiting section 40 may have a straight portion formed along the up-down direction Z. Alternatively, for example, the heat transfer inhibiting section 40 may have a curve. In the example illustrated in Fig. 7, the heat transfer inhibiting section 40 is formed in such a way as to bypass a section 50 on the external surface of the case 20 to which a part is attached. In the example illustrated in Fig. 7, the heat transfer inhibiting section 40 consists of two concave grooves that are formed on the external surface. In the example illustrated in Fig. 7, the heat transfer inhibiting section 40 may be a concave groove that is formed on the inner surface of the case 20.
(3) In the embodiments described above, configurations in which the power transmission mechanism GT, the rotating electric machine MG, and the differential gear mechanism 15 are housed in the case 20 are described as examples. However, configurations for embodiments are not limited to such examples, and for example, the differential gear mechanism 15 does not have to be housed in the case 20. Alternatively, for example, the power transmission mechanism GT does not have to be housed in the case 20. Alternatively, for example, the vehicular driving device 10 does not have to include the differential gear mechanism 15. Alternatively, for example, the rotating electric machine MG may be an in-wheel motor.
(4) In the embodiments described above, configurations in which the heat transfer inhibiting section 40 is provided at a position that is on a level with or lower than the height of the opening 27 and on a level with or higher than the oil level in the up-down direction Z are described as examples. However, configurations for embodiments are not limited to such examples, and for example, the heat transfer inhibiting section 40 may be provided at a position that is a little lower than the oil level in the up-down direction Z. Alternatively, the heat transfer inhibiting section 40 may be provided at a position that is a little higher than the height of the opening 27 in the up-down direction Z.
(5) In the embodiments described above, configurations in which the heat transfer inhibiting section 40 is a concave groove that is formed on at least one of the inner surface and the external surface of the case 20 are described as examples. However, configurations for embodiments are not limited to such examples, and for example, the heat transfer inhibiting section 40 may be formed of metal or resin that has higher thermal resistance than a material of other portions of the case 20. Alternatively, for example, the heat transfer inhibiting section 40 may have a cavity extending in the horizontal direction inside the case 20. Alternatively, for example, the heat transfer inhibiting section 40 may include a member that is disposed in the concave groove or the cavity and formed of metal or resin. Alternatively, for example, the heat transfer inhibiting section 40 may be a passage that is formed in such a way as to extend in the horizontal direction and to occupy a part of the case 20 in the thickness direction.
(6) In the embodiments described above, configurations in which the vehicular driving device 10 includes the heat exchanger 32 and the oil pump 31 are described as examples. However, configurations for embodiments are not limited to such examples, and for example, the vehicular driving device 10 does not have to include the oil pump 31. Alternatively, embodiments may have, for example, a configuration in which the vehicular driving device 10 does not include the heat exchanger 32 and the oil storage section 26 directly heats an in-vehicle device or the like.
(7) The configurations disclosed in the embodiments described above may be combined with the configuration disclosed in alternative embodiments and applied to the vehicular driving device 10 as long as there is no inconsistency. The embodiments disclosed in the present description, including alternative configurations, are merely examples in every respect. Therefore, various modifications may be appropriately made without departing from the spirit and the scope of this disclosure.

### (Summary of embodiments described above)

The vehicular driving device according to this disclosure is described below.

In one aspect, a vehicular driving device (10) includes a rotating electric machine (MG), a output member (spline engagement section 15d) that is coupled to and drives wheels (a first wheel W1 and a second wheel W2), a power transmission mechanism (GT) for transmitting power between the rotating electric machine (MG) and the output member (spline engagement section 15d), and a case (20) for accommodating the rotating electric machine (MG), the power transmission mechanism (GT), and oil, wherein an oil storage section (26) in which oil is stored is formed in a lower part of the case (20), the case (20) includes a heat transfer inhibiting section (40) that is provided at a position in a up-down direction (Z) based on an oil level in the oil storage section (26) in such a way as to extend in a horizontal direction, and the heat transfer inhibiting section (40) has higher thermal resistance than a portion of the case (20) being located on an upper side (Z1) with respect to and adjacent to the heat transfer inhibiting section (40) or a portion of the case (20) being located on a lower side (Z2) with respect to and adjacent to the heat transfer inhibiting section (40).

This configuration can prevent heat of oil in the oil storage section (26) from transferring to the case (20) and to a portion of the case (20) being located on the upper side (Z1) with respect to the heat transfer inhibiting section (40). Thus, an amount of heat of the oil to be dissipated outside via the case (20) can be reduced. Therefore, heat of the oil stored in the oil storage section (26) can be easily utilized.

In one aspect, the heat transfer inhibiting section (40) is provided at a position that is on a level with or higher than the oil level (Qmin1) in the oil storage section (26) when the rotating electric machine (MG) is in operation.

According to this configuration, when the rotating electric machine (MG) is in operation, a region in the case (20) to which heat of the oil in the oil storage section (26) transfers can be easily reduced. Thus, an amount of heat of the oil to be dissipated outside via the case (20) when the rotating electric machine (MG) is in operation can be reduced.

In one aspect, the heat transfer inhibiting section (40) includes a concave groove that is formed on at least one of the inner surface and the external surface of the case (20).

According to this configuration, the configuration of the heat transfer inhibiting section (40) can be easily simplified.

In one aspect, the heat transfer inhibiting section (40) is formed continuously along an entire circumference extending in the horizontal direction of the case (20).

This configuration can effectively prevent heat of the oil in the oil storage section (26) from transferring to a portion located on the upper side (Z1) with respect to the heat transfer inhibiting section (40).

In one aspect, an opening (27) for refilling the case (20) with oil is provided on the external surface of the case (20), and the heat transfer inhibiting section (40) is provided at a position that is on a level with or lower than a height (S1) of the opening (27) in the up-down direction (Z) and on a level with or higher than the oil level (Qmin1) in the oil storage section (26) when the rotating electric machine (MG) is in operation.

According to this configuration, a region in the case (20) to which heat of the oil in the oil storage section (26) transfers can be easily reduced. Thus, an amount of heat of the oil to be dissipated outside via the case (20) can be reduced.

The vehicular driving device according to this disclosure just has to achieve at least one of the effects described above.

## Claims

1. A vehicular driving device (10) comprising:
a rotating electric machine (MG);
an output member (15d) that is coupled to and drives a wheel (W1, W2);
a power transmission mechanism (GT) that transmits power between the rotating electric machine (MG) and the output member (15d); and
a case (20) for accommodating the rotating electric machine (MG), the power transmission mechanism (GT), and oil, wherein
an oil storage section (26) in which oil is stored is formed in a lower part of the case (20),
the case (20) includes a heat transfer inhibiting section (40) that is provided at a position in an up-down direction (Z) based on an oil level in the oil storage section (26) in such a way as to extend in a horizontal direction, and
the heat transfer inhibiting section (40) has higher thermal resistance than a portion of the case (20) being located on an upper side (Z1) with respect to and adjacent to the heat transfer inhibiting section (40) or a portion of the case (20) being located on a lower side (Z2) with respect to and adjacent to the heat transfer inhibiting section (40).

2. The vehicular driving device (10) according to Claim 1, wherein the horizontal direction and the up-down direction (Z) respectively mean a horizontal direction and an up-down direction (Z) when a vehicle (8) on which the vehicular driving device (10) is installed is on a horizontal road surface.

3. The vehicular driving device (10) according to Claim 1, wherein the heat transfer inhibiting section (40) is provided at a position that is on a level with or higher than an oil level in the oil storage section (26) when the rotating electric machine (MG) is in operation.

4. The vehicular driving device (10) according to Claim 1, wherein the heat transfer inhibiting section (40) is provided at a position that is on a level with or higher than the highest oil level in the oil storage section (26).

5. The vehicular driving device (10) according to any one of Claims 1 to 4, wherein the heat transfer inhibiting section (40) is provided at a position that is on a level with or lower than a rotation axis of a rotor included in the rotating electric machine (MG) in the up-down direction (Z).

6. The vehicular driving device (10) according to any one of Claims 1 to 4, wherein,
on an external surface of the case (20), there is provided an opening (27) for refilling the case (20) with oil, and
the heat transfer inhibiting section (40) is provided at a position that is on a level with or lower than a height of the opening (27).

7. The vehicular driving device (10) according to any one of Claims 1 to 4, wherein the heat transfer inhibiting section (40) includes a concave groove that is formed on at least one of an inner surface and an external surface of the case (20).

8. The vehicular driving device (10) according to any one of Claims 1 to 4, wherein the heat transfer inhibiting section (40) is formed continuously along an entire circumference extending in the horizontal direction of the case (20).

9. The vehicular driving device (10) according to any one of Claims 1 to 4, wherein the heat transfer inhibiting section (40) is formed non-continuously in such a way as to extend in the horizontal direction.

10. The vehicular driving device (10) according to any one of Claims 1 to 4, wherein the heat transfer inhibiting section (40) is formed of metal or resin that has higher thermal resistance than a material of other portions of the case (20).
